# EUROPÄISCHE PATENTSCHRIFT

(11) **EP 2 229 428 B1**
(45) Veröffentlichungstag und Bekanntmachung des Hinweises auf die Patenterteilung: **12.04.2017**
(21) Anmeldenummer: 08701276.1
(22) Anmeldetag: 07.01.2008
(51) Int. Cl.: C10B 47/44, C10B 57/10, B01D 46/24, C10K 1/02

(54) **PYROLYTISCHER GASERZEUGER**
PYROLYTIC GAS GENERATOR
GÉNÉRATEUR DE GAZ PAR PYROLYSE

(43) Veröffentlichungstag der Anmeldung: 22.09.2010
(73) Patentinhaber: von Görtz & Finger Techn. Entwicklungs Ges.m.b.H., 36110 Schlitz (DE)
(72) Erfinder: FINGER, Ulrich, 87647 Oberthingau (DE)
(74) Vertreter: Hutzelmann, Gerhard
(86) Internationale Anmeldenummer: PCT/EP2008/050100
(87) Internationale Veröffentlichungsnummer: WO 2009/086926

(56) Entgegenhaltungen:
- EP-A- 0 839 893
- EP-A- 1 865 045
- EP-A2- 0 129 053
- EP-A2- 1 870 444
- WO-A-2006/093373
- WO-A1-00/71231
- DE-U1-202007 013 672
- US-A- 4 206 186
- US-A1- 2007 010 589

## Beschreibung

Die Erfindung bezieht sich auf einen pyrolytischen Gaserzeuger zur Erzeugung von sauberem Nutzgas aus Biomasse, insbesondere Holz, Ölsaaten od. dgl.

Es sind verschiedene derartige Gaserzeuger bekannt, die jedoch alle den Nachteil aufweisen, nur schwer handhabbar zu sein, keinen befriedigenden Wirkungsgrad aufzuweisen und keine, den Anforderungen an eine weitere Verwertung des erzeugten Gases in beispielsweise Blockheizkraftwerken genügende, Sauberkeit des Gases aufzuweisen.

Zudem haben sich immer wieder Probleme bei der Vergasung von ölhaltigen Saaten, Presskuchen dieser Saaten oder dergleichen ergeben.

Aus der WO 2006/093373 A1 ist beispielsweise ein pyrolytischer Gaserzeuger der genannten Art in mehrkammiger Ausführung mit einem äußeren Stützbrenner bekannt.

Aus der EP 1 865 045 A1 ist ein weiterer gattungsgemäßer Gaserzeuger bekannt.

Daher liegt der vorliegenden Erfindung die Aufgabe zugrunde, einen Gaserzeuger vorzuschlagen, der nicht nur mit Holz, sondern auch mit ölhaltigen Saaten wie zum Beispiel Raps, Presskuchen oder anderer Biomasse betrieben werden kann und dabei qualitativ hochwertiges Pyrolyse Nutzgas liefert.

Diese Aufgabe wird erfindungsgemäß durch die Merkmale des Hauptanspruchs gelöst.

Durch den mehrkammrigen Aufbau wird dafür Sorge getragen, daß der Pyrolysevorgang immer unter optimalen Bedingungen verläuft.

Dabei hat es sich als sehr vorteilhaft erwiesen, wenn sowohl das Vorpyrolyserohr als auch der Vergasungskanal einen Kanal zur Zuführung von externer Wärme aufweisen.

Durch die Zuführung von externen Wärme wird die Pyrolyse gestartet und aufrecht erhalten.

Ebenfalls sehr vorteilhaft ist es, wenn der Wärmezuführungskanal im wesentlichen unterhalb des jeweiligen Prozesskanals, jedoch diesen trotzdem umgebend angeordnet ist.

Dabei hat es sich erfindungsgemäß auch als sehr vorteilhaft erwiesen, wenn der Wärmezuführungskanal unterhalb des Prozesskanales angeordnet ist und am vom Stützbrenner abgewandten Ende dann in einen den Prozesskanal umgebenden Kanal übergeht.

Hierdurch wird eine sehr gleichmässige Wärmezufuhr sichergestellt.

Eine erfindunsgemäß sehr vorteilhafte Ausgestaltung liegt auch dann vor, wenn Leitbleche am Vergasungskanal und/oder am Vorpyrolyserohr vorgesehen sind, die in den Wärmezuführungskanal hineinragen.

Dadurch wird der Wärmeübergang zwischen Wärmezuführungskanal und Prozesskanal nochmals verbessert.

Eine sehr vorteilhafte Fortbildung der Erfindung liegt auch vor, wenn im Vorpyrolyserohr und/oder im Vergasungskanal eine Transportschnecke oder eine anderweitige Transporteinrichtung zum gleichmässigen Transportieren des Vergasungsmateriales vorgesehen ist.

Hierdurch wird eine sehr gute Ausnutzung des Vergasungsmaterials gewährleistet.

Sehr vorteilhaft ist es erfindungsgemäß auch, wenn ein Koksbehälter mit Grobkoks vorgesehen ist, durch den das erzeugte Nutzgas zum Filtern und Abkühlen geleitet wird.

Damit wird eine sehr weitreichende Reinigung und Abkühlung des Nutzgases erzielt.

Dabei hat es sich als sehr vorteilhaft herausgestellt, wenn eine Gaseinleitung im Deckbereich des Koksbehälters oberhalb des Füllgutes vorgesehen ist.

Ebenfalls sehr vorteilhaft ist es, wenn eine Gasausleitung bestehend aus einer Mehrzahl von Rohren im unteren Bereich des Koksbehälters vorgesehen ist.

Durch beide Maßnahmen wird einerseits eine sehr gute Durchströmung des Grobkokses durch durch das Nutzgas und andererseits ein nur geringfügiges Mitreißen von Koksteilchen durch das gereinigte Gas sichergestellt.

Äußerst vorteilhaft ist es auch, wenn eine Einrichtung zum Zuführen von mit Gasrückständen belastetem Koks zum Vergasungskanal vorgesehen ist.

Der belastete Koks wird dann zusammen mit dem Pyrolysematerial entgast und damit genutzt.

Gemäß einer weiteren Ausgestaltung der Erfindung ist es auch sehr vorteilhaft, wenn am Ende des Vergasungskanales ein Austrag für nicht vollständig vergastes Vergasungsgut vorgesehen ist.

So wird ein Anhäufen von nicht vollständig vergastem Vergasungsgut im Vergasungskanal vermieden.

Dabei ist es äußerst vorteilhaft, wenn eine Zuführeinrichtung vorgesehen ist, die das ausgetragene Vergasungsgut am Anfang des Vergasungsrohres zuzuführen vermag.

Das nicht vollständig vergaste und ausgetragene Vergasungsgut wird so nochmals dem Pyrolyseprozess zugeführt und vollständig vergast.

Ebenfalls sehr vorteilhaft ist es erfindungsgemäß, wenn eine Zuführeinrichtung vorgesehen ist, die das ausgetragene Vergasungsgut dem Koksbehälter zuführt.

Gerade beim Vergasen von Holz entsteht Koks, der dann gleich zum Filtern des Nutzgases eingesetzt werden kann.

Dabei hat es sich als sehr vorteilhaft erwiesen, wenn eine Siebeinrichtung vorgesehen ist, die kleine Partikel des nicht vollständig vergasten Vergasungsgutes vor Zuführung zum Koksbehälter auszusieben vermag.

Zu kleine Partikel des Kokses würden eine Durchströmung des Koksbehälters mit Nutzgas erschweren oder sogar verhindern.

Es hat sich dabei allerdings auch als sehr vorteilhaft erwiesen, wenn eine Zuführung des ausgesiebten Vergasungsgutes zum Austrag des Koksbehälters vorgesehen ist.

Das ausgesiebte Vergasungsgut wird so trotzdem vollständig verwertet.

Eine weitere sehr vorteilhafte Ausgestaltung der Erfindung liegt auch darin, daß ein Filter für das heiße Nutzgas vorgesehen ist, der dem Vergasungskanal nachgeschaltet ist und der feste Rückstände im Nutzgas, mitgerissene Asche und Staub auszufiltern vermag.

Hierdurch wird die Asche aus dem System entnomen.

Dabei hat es sich als sehr vorteilhaft erwiesen, wenn der Filter als Keramikfilter mit einer Vielzahl von Filterkanälen ausgebildet ist.

Die Asche und der Staub lagern sich im Keramikfilter ab.

Es hat sich gemäß einer weiteren Fortbildung der Erfindung auch als sehr vorteilhaft erwiesen, wenn eine Abreinigungseinrichtung im Filter vorgesehen ist.

Damit wird ein Verstopfen des Filters vermieden und eine gleichbleibende Filterleistung sichergestellt.

Äußerst vorteilhaft ist es dabei, wenn als Abreinigungseinrichtung eine Mehrzahl von Gasdüsen vorgesehen ist, die stoßweise mit unter Druck stehendem, gereinigtem Nutzgas beaufschlagt werden.

Durch diese Ausgestaltung wird der Filter sehr wirkungsvoll gereinigt, ohne auf mechanische oder Luft einbringende Methoden angewiesen zu sein.

Eine weitere sehr vorteilhafte Ausgestaltung der Erfindung ist auch darin zu sehen, daß ein Kühler zum Abkühlen des Nutzgases vorzugsweise nach dem Filter vorgesehen ist.

Durch einen Kühler wird das Nutzgas von der hohen Prozesstemperatur herabgekühlt. Ein Kühler kann zusätzlich oder anstatt des Koksbehälters vorgesehen sein.

Dabei ist es sehr vorteilhaft, wenn der Kühler als Röhrenkühler ausgebildet ist, in dessen Röhren rotierende Bürsten vorgesehen sind, die an den Röhreninnenwänden kondensierendes Öl, Teere, Wasser und anderweitige Ablagerungen zu einer Auffangeinheit abzutransportieren vermögen.

Äußerst vorteilhaft ist es dabei, wenn die Bürsten spiralförmig ausgebildet sind und/oder daß die Röhren stehend angeordnet sind.

Durch diese Ausgestaltungen wird einerseits eine gute Kühlwirkung und andererseits auch ein sehr guter Austrag von Öl, Teer, Wasser und anderen Stoffen gewährleistet.

Eine weitere äußerst vorteilhafte Ausgestaltung der Erfindung liegt auch dann vor, wenn ein Gaswäscher vorgesehen ist, bei dem das Gas mit Hilfe eines Ölnebels gewaschen wird.

Durch den Gaswäscher werden weitere, noch im Nutzgas vorhandene Partikel entfernt.

Dabei hat es sich als äußerst vorteilhaft erwiesen, wenn mehrere rotierende Öldüsen vorgesehen sind, die von einem ebenfalls rotierenden Schleuderrad umgeben sind und das Gas in den Raum zwischen Düsen und Schleuderrad eingeleitet wird.

Hierdurch wird das gesamte Nutzgas mit einem sehr fein verteilten und homogenen Ölnebel versetzt.

Es hat sich erfindungsgemäß auch als sehr vorteilhaft erwiesen, wenn ein Tropfenabscheider vorgesehen ist, der das Nutzgas vom Ölnebel zu trennen vermag.

Dabei ist es sehr vorteilhaft, wenn eine Vielzahl von Prallblechen vorgesehen ist, die zueinander versetzt und/oder verwinkelt angeordnet sind, wobei an diesen Prallblechen der mit Verunreinigungen versetzte Ölnebel abgeschieden und zu einem Ölvorrat abgeleitet wird.

Durch einen derartigen Tropfenabscheider wird der Ölnebel wirkungsvoll wieder vom Nutzgas getrennt.

Zusätzlich hat es sich als sehr vorteilhaft erwiesen, wenn ein Filtereinsatz dem Gaswäscher nachgeschaltet ist.

Etwaige durch den Tropfenabscheider hindurch mitgerissene Öltröpfchen bleiben spätesten an diesem Filtereinsatz hängen. Trotzdem ist die Belastung des Filtereinsatzes äußerst gering, so daß große Standzeiten erreicht werden.

Es hat sich auch als sehr vorteilhaft erwiesen, wenn der Tropfenabscheider koaxial zum Ölwäscher angeordnet ist.

Hierdurch wird eine sehr kompakte Bauweise des Gaswäschers erreicht.

Eine weitere sehr vorteilhafte Ausgestaltung der Erfindung liegt auch darin, daß eine Zuführung des belasteten Öles zum Stützbrenner vorgesehen ist.

Damit wird nicht nur das mit Partikeln belastete Öl sinnvoll genutzt, sondern auch noch eine zusätzliche Vorwärmung des dem Stützbrenner zugeleiteten Öls sichergestellt. Eine derartige Vorwärmung ist gerade bei Einsatz von Pflanzenölen, insbesondere Rapsöl, Sojaöl, Palmöl oder dergleichen sinnvoll bzw. nötig.

Eine weitere sehr vorteilhafte Fortbildung der Erfindung liegt auch darin, daß eine Sicherheitseinrichtung zur Verhinderung von Flammrückschlägen oder dergleichen dem Gaserzeuger nachgeschaltet ist.

Dabei hat es sich als sehr vorteilhaft erwiesen, wenn ein Wasserbad vorgesehen ist, durch welches das Nutzgas hindurchgeleitet wird.

Damit wird auf einfache Art und Weise ein Rückschlagschutz erreicht, der zudem äußerst unempfindlich gegenüber etwaige aggressive Bestandteile des Nutzgases ist.

Im folgenden wird die Erfindung anhand mehrerer Ausführungsbeispiele veranschaulicht.

Dabei zeigen:
- Fig. 1: eine schematische Darstellung eines pyrolytischen Gaserzeugers,

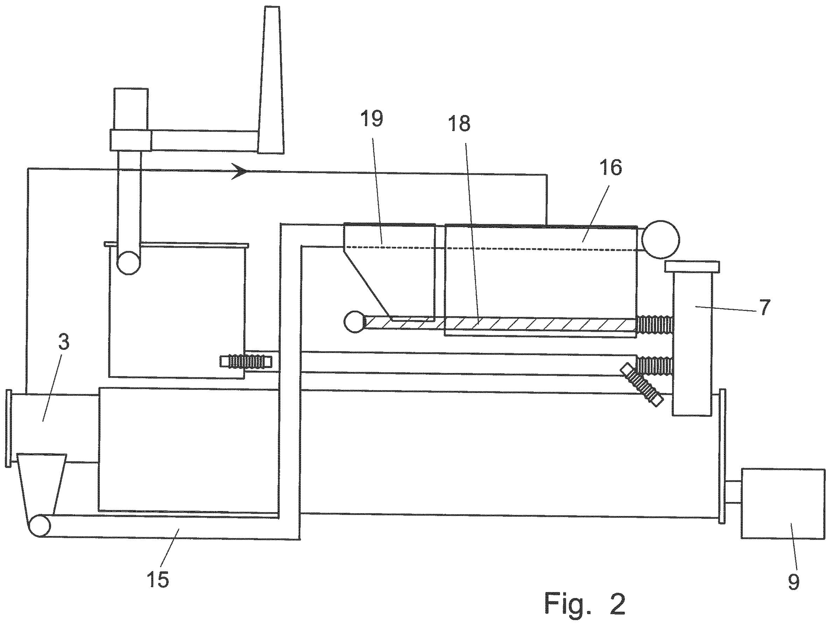

- Fig. 2: eine schematische Darstellung eines weiteren Gaserzeugers mit einem Koksbehälter,

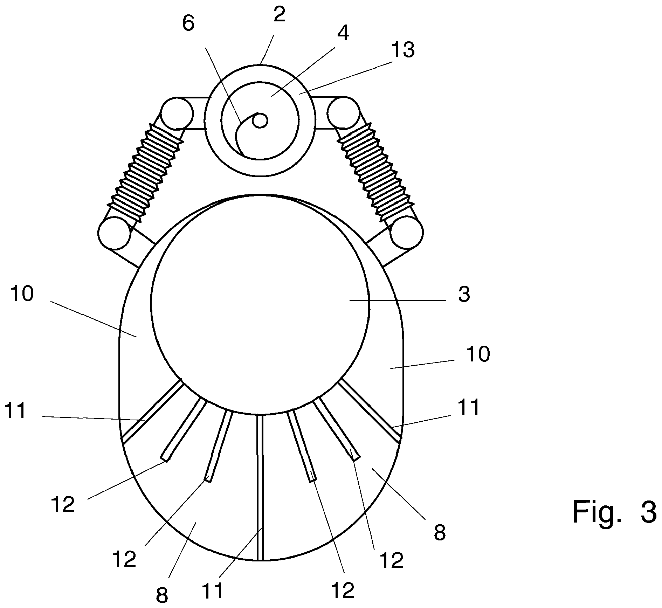

- Fig. 3: einen Schnitt durch einen Vergasungskanal und ein Vorpyrolyserohr,

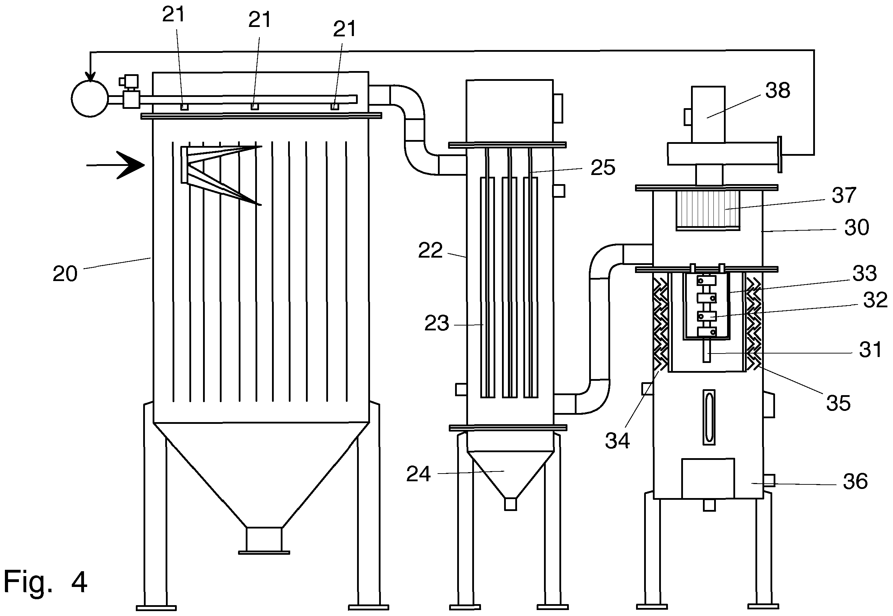

- Fig. 4: eine schematische Darstellung eines Heißgasfilters, Nutzgaskühlers und eines Gaswäschers und

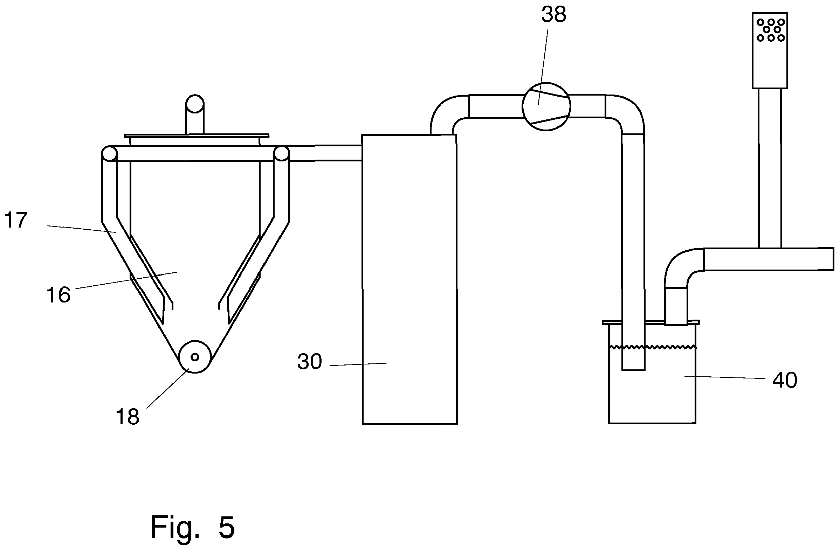

- Fig. 5: eine schematische Darstellung eines Flammenrückschlagschutzes.

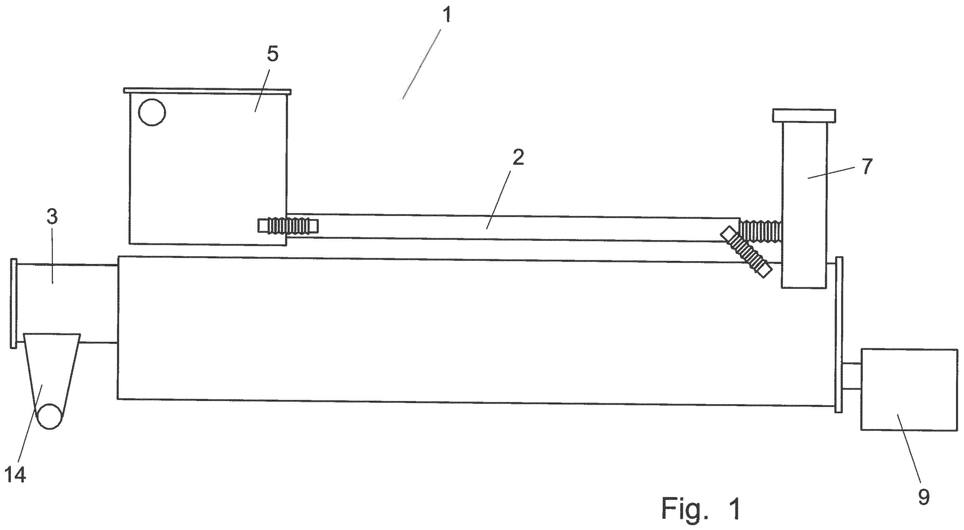

Mit 1 ist in Fig. 1 ein pyrolytischer Gaserzeuger bezeichnet, der im wesentlichen aus einem Vorpyrolyserohr 2 und einem Vergasungskanal 3 aufgebaut ist und zur Herstellung von Nutzgas, oftmals bekannt als Holzgas, aus Vergasungsmaterial dient. Das Vorpyrolyserohr 2 ist coaxial doppelwandig ausgebildet. Das Vergasungsmaterial wird im inneren Bereich 4 von einem Vorratsbehälter 5 mittels einer Förderschnecke 6 durch das Vorpyrolyserohr 2 gefördert. Im Vorpyrolyserohr 2 wird das Vergasungsmaterial getrocknet und vorpyrolysiert, das dann anschließend durch einen Füllschacht 7 hindurch in den Vergasungskanal 3 gelangt. Unterhalb des Vergasungskanals 3 ist eine Unterkammer 8 angeordnet, in die ein Stützbrenner 9 Wärme abgiebt. Der Stützbrenner 9 ist dabei am selben Ende des Vergasungskanales 3 angeordnet, an dem auch der Füllschacht 7 angeordnet ist. Am vom Stützbrenner 9 abgewandten Ende der Unterkammer 8 ist ein Übergang zu einer Oberkammer 10 angeordnet, die im oberen Bereich den Vergasungskanal 3 umgibt. Durch die Oberkammer 10 und die Unterkammer 8 ist der Vergasungskanal 3 vollständig umgeben. Unter dem Vergasungskanal 3 ist eine wenigstens abschnittsweise ausgeführte Stütze 11 vorgesehen, die ein Verwinden und Durchbiegen des Vergasungskanales 3 verhindert. Zusätzlich sind in die Unterkammer 8 hineinragende und vom Vergasungskanal 3 ausgehende Leitbleche 12 vorgesehen, die für einen besseren Wärmeübergang zwischen Unterkammer 8 und Vergasungskanal 3 sorgen und so eine ausreichende Temperatur für die pyrolytische Vergasung des Vergasungsmaterials sorgen. Übliche Temperaturen zur Vergasung von Biomasse liegen zwischen 200 und 1000°C.

Die Abwärme der Oberkammer 10 wird dann der Außenkammer 13 des Vorpyrolyserohres 2 zugeführt. Danach werden die immer noch warmen Rauchgase des Stützbrenners 9 durch den Vorratsbehälter 5 geleitet, wodurch dort das Vergasungsmaterial bereits vorgewärmt wird.

Das Vergasungsmaterial wird im Vergasungskanal 3 ebenfalls wie im Vorpyrolyserohr 2 mechanisch transportiert. Dies kann wieder mit einer Förderschnecke erfolgen, die in den Zeichnungen jedoch nicht dargestellt ist.

Asche wird mit dem im Vergasungskanal 3 erzeugten Nutzgas mitgerissen. Nicht vollständig vergastes Vergasungsmaterial wird am Ende des Vergasungskanales 3 durch eine Schleuse 14 ausgeschleust und über eine Förderschnecke 15 entweder direkt wieder dem Vergasungskanal 3 zusammen mit neuem Vergasungsmaterial zugeführt oder aber einem Koksbehälter 16 zugeschlagen, durch den auch das erzeugte Nutzgas zur Filterung und Abkühlung geleitet werden kann. Hierzu wird das Nutzgas im oberen Bereich des Koksbehälters 16 eingeleitet und im unteren Bereich durch mehrere Rohre 17 wieder ausgeleitet. Durch die Verwendung mehrerer Ausleitrohre 17 wird die Strömungsgeschwindigkeit reduziert und so das Mitreissen von Kokspartikeln minimiert. Der belastete Koks wird dann über eine Förderschnecke 18 dem Füllschacht 7 zugeleitet und ebenfalls vollständig vergast.

Es ist auch denkbar, daß anstatt oder zusätzlich zu den Rohren 17 andere, großflächige Ausleitungen vorgesehen sind. Denkbar ist zum Beispiel, nach unten gerichtete Hutzen im Koksbehälter 16 anzuordnen, durch die hindurch das Nutzgas ausgeleitet wird.

Der Einsatz eines Koksbehälters 16 kann aber nur dann in Frage kommen, wenn Holzmaterialien vergast werden. Denn nur der bei der Holzvergasung entstehende Koks kann dem Koksbehälter 16 zugeleitet werden. Aus dem Vergasungsrohr 3 ausgeleitetes nicht vollständig ausgegastes Vergasungsmaterial weist eine recht unterschiedliche Körnigkeit auf. Zu feinkörniges Material im Koksbehälter 16 sorgt jedoch für einen erhöhten Widerstand beim Durchtritt des Nutzgases. Zudem steigt die Gefahr, daß Kokspartikel mit dem Nutzgas mitgerissen werden.

Daher ist dem Koksbehälter noch eine Siebeinheit 19 vorgeschaltet, die kleine Kokspartikel auszusondern vermag und diese direkt der Förderschnecke 18 zuleitet zur vollständigen Vergasung.

Direkt nach dem Vergasungskanal 3 kann ein Heißgasfilter 20 vorgesehen sein, der als Keramikfilter ausgebildet sein kann. Ein derartiger Keramikfilter mit beispielsweise mehreren Filterkerzen sorgt für eine Anlagerung von Staub und Asche. Diese Anlagerungen werden dann intervallmäßig durch unter Druck stehendes Gas abgeblasen, welches durch Druckdüsen 21 in den Filter 20 einzuströmen vermag. Als Abblasegas wird vollständig gereinigtes Nutzgas eingesetzt um eine Vermischung des Nutzgases mit anderen Komponenten zu vermeiden.

Es kann auch nach dem Heißgasfilter 20 und/oder nach dem Koksbehälter 16 noch ein Kühler 22 vorgesehen sein, der zum Beispiel mehrere Kühlröhren 23 aufweist. Das Nutzgas durchströmt diese Röhren 23 auf der Innenseite. Beim Abkühlen des Nutzgases an den Röhreninnenwänden lagert sich Wasser, Öl und eventuell auch Teerrückstände ab. Diese werden einerseits durch eine stehende Anordnung der Röhren 23 zu einem darunter angebrachten Auffangbehälter 24 abgeleitet und andererseits durch rotierende, vorzugsweise spiralförmig ausgebildete Bürsten 25 abgestreift.

Aber auch danach kann eine ausreichend gute Reinigung des Nutzgases noch nicht sichergestellt werden.

Deswegen ist ein zusätzlicher Gaswäscher 30 vorgesehen. Der Gaswäscher 30 weist auf einer rotierenden Achse 31 angeordnete Düsenringe 32 auf, durch die Öl, insbesondere Pflanzenöl, vorzugsweise Rapsöl gepresst und dabei zerstäubt wird. Die Düsenringe 32 sind innerhalb eines Rotationsrades 33 angeordnet. Zwischen den Düsenringen 32 und dem Rotationsrad 33 wird das Nutzgas eingeleitet. Durch das Zusammenspiel der rotierenden Düsenringe 32 und dem ebenfalls rotierenden Rotationsrad 33 wird ein sehr feiner Ölnebel erzeugt, der das Nutzgas vollständig und homogen durchsetzt und so für eine Abscheidung von noch im Nutzgas befindlicher Partikel in die Öltröpfchen hinein sorgt.

Der Ölnebel wird durch einen Tropfenabscheider 34 zurückgehalten, der aus einer Vielzahl von gewinkelten und versetzt zueinander angeordneten Prallblechen 35 besteht. Durch diese Prallbleche 35 muss das Nutzgas hindurchströmen. Das Öl wird zurückgehalten und tropft in einen Auffangbehälter 36 ab, der auch gleichzeitig als Vorratsbehälter dient. Der Tropfenabscheider ist koaxial außerhalb der Zerstäubungseinrichtung angeordnet.

Das Filteröl kann dem Stützbrenner 9 als Brennstoff zugeleitet werden, so daß gleich auch die ausgefilterten Partikel verbrannt werden. Ein großer Vorteil dieser Zweitnutzung des Filteröles ist, daß das Öl für den Einsatz im Stützbrenner bereits vorgewärmt ist und so besser verbrannt werden kann. Dem Auffangbehälter 36 wird dann laufend nach Bedarf Frischöl zugeleitet um einen vorgegebenen Füllstand zu erhalten.

Das so gewaschene Nutzgas wird noch durch einen oberhalb des Tropfenabscheiders 34 angeordneten Ringfilter 37 geleitet, der etwaige noch mitgerissene Öltröpfchen aufnimmt. Der Ringfilter 37 ist dabei jedoch sehr gering belastet, so daß dieser hohe Standzeiten aufweist.

Danach ist ein Saugzug 38 vorgesehen, der das Nutzgas durch die gesamte Anlage saugt und so für Unterdruck in der Anlage sorgt. Ein Entweichen von giftigem CO aus der Anlage ist damit ausgeschlossen.

Nach dem Saugzug 38 kann noch ein Flammenrückschlagschutz 40 vorgesehen sein, der als Wasserbad ausgebildet ist, durch das das Gas hindurchströmen muss. Die Feuchtigkeitsaufnahme des Nutzgases ist hier vernachlässigbar gering. Andererseits wird aber ein wirksamer Flammenrückschlagschutz 40 gebildet, der eine Verpuffung oder dergleichen auf den Bereich nach dem Gaserzeuger 1 beschränkt.

Das pyrolytisch erzeugte Nutzgas kann dann beispielsweise in einem BHKW als Antriebsgas genutzt werden.

## Patentansprüche

1. Pyrolytischer Gaserzeuger zur Erzeugung von sauberem Nutzgas aus Biomasse, insbesondere Holz, Ölsaaten od. dgl., **dadurch gekennzeichnet, daß** der Gaserzeuger in mehrkammriger Ausführung vorgesehen ist, wobei der Gaserzeuger mit einem Stützbrenner versehen ist, der einem Vergasungskanal während der Vergasung der Biomasse von außen Wärme zuführen kann, ein Vorpyrolyserohr dem Vergasungskanal vorgeschaltet und ein Ascheaustrag dem Vergasungskanal nachgeschaltet ist, wobei die erzeugten Gase im Vergasungskanal nachvergast werden, während das zu vergasende Material von einem Materialbehälter bis zum Ascheaustrag mechanisch transportiert wird, wobei im Vorpyrolyserohr das Vergasungsmaterial getrocknet und vorpyrolysiert wird, das dann anschließend durch einen Füllschacht hindurch in den Vergasungskanal gelangt, wobei unterhalb des Vergasungskanals eine Unterkammer angeordnet ist, in die der Stützbrenner Wärme abgibt, wobei der Stützbrenner am selben Ende des Vergasungskanales angeordnet ist, an dem auch der Füllschacht angeordnet ist, wobei am vom Stützbrenner abgewandten Ende der Unterkammer ein Übergang zu einer Oberkammer angeordnet ist, die im oberen Bereich den Vergasungskanal umgibt, wodurch die Oberkammer und die Unterkammer den Vergasungskanal vollständig umgeben und wobei unter dem Vergasungskanal eine wenigstens abschnittsweise ausgeführte Stütze vorgesehen ist, die ein Verwinden und Durchbiegen des Vergasungskanales verhindert.

2. Gaserzeuger nach Anspruch 1, **dadurch gekennzeichnet, daß** ein Filter für das heiße Nutzgas vorgesehen ist, der dem Vergasungskanal nachgeschaltet ist und der feste Rückstände im Nutzgas, mitgerissene Asche und Staub auszufiltern vermag und daß ein Gaswäscher vorgesehen ist, bei dem das Gas mit Hilfe eines Ölnebels gewaschen wird und daß eine Zuführung des belasteten Öles zum Stützbrenner vorgesehen ist.

3. Gaserzeuger nach Anspruch 1 oder 2, **dadurch gekennzeichnet, daß** sowohl das Vorpyrolyserohr als auch der Vergasungsrohr einen Kanal zur Zuführung von externer Wärme aufweisen und daß der Wärmezuführungskanal im wesentlichen unterhalb des jeweiligen Prozesskanals, jedoch diesen trotzdem umgebend angeordnet sein kann und daß der Wärmezuführungskanal unterhalb des Prozesskanales angeordnet ist und am vom Stützbrenner abgewandten Ende dann in einen den Prozesskanal umgebenden Kanal übergehen kann, und/oder daß Leitbleche am Vergasungskanal und/oder am Vorpyrolyserohr vorgesehen sein können, die in den Wärmezuführungskanal hineinragen.

4. Gaserzeuger nach einem der vorangehenden Ansprüche, **dadurch gekennzeichnet, daß** im Vorpyrolyserohr und/oder im Vergasungskanal eine Transportschnecke oder eine anderweitige Transporteinrichtung zum gleichmässigen Transportieren des Vergasungsmateriales vorgesehen ist und/oder daß ein Koksbehälter mit Grobkoks vorgesehen ist, durch den das erzeugte Nutzgas zum Filtern und Abkühlen geleitet wird, wobei eine Gaseinleitung im Deckbereich des Koksbehälters oberhalb des Füllgutes vorgesehen sein kann und/oder wobei eine Gasausleitung bestehend aus einer Mehrzahl von Rohren im unteren Bereich des Koksbehälters vorgesehen sein kann und/oder wobei eine Einrichtung zum Zuführen von mit Gasrückständen belastetem Koks zum Vergasungskanal vorgesehen sein kann und/oder wobei am Ende des Vergasungskanales ein Austrag für nicht vollständig vergastes Vergasungsgut vorgesehen sein kann.

5. Gaserzeuger nach Anspruch 4, **dadurch gekennzeichnet, daß** eine Zuführeinrichtung vorgesehen ist, die das ausgetragene Vergasungsgut am Anfang des Vergasungsrohres zuzuführen vermag und/oder daß eine Zuführeinrichtung vorgesehen ist, die das ausgetragene Vergasungsgut dem Koksbehälter zuführt, wobei eine Siebeinrichtung vorgesehen sein kann, die kleine Partikel des nicht vollständig vergasten Vergasungsgutes vor Zuführung zum Koksbehälter auszusieben vermag, wobei wiederum eine Zuführung des ausgesiebten Vergasungsgutes zum Austrag des Koksbehälters vorgesehen sein kann.

6. Gaserzeuger nach einem der vorangehenden Ansprüche, **dadurch gekennzeichnet, daß** der Filter als Keramikfilter mit einer Vielzahl von Filterkanälen ausgebildet sein kann, und/oder wobei eine Abreinigungseinrichtung im Filter vorgesehen sein kann, die als Abreinigungseinrichtung eine Mehrzahl von Gasdüsen vorgesehen haben kann, die stoßweise mit unter Druck stehendem, gereinigtem Nutzgas beaufschlagt werden können.

7. Gaserzeuger nach einem der vorangehenden Ansprüche, **dadurch gekennzeichnet, daß** ein Kühler zum Abkühlen des Nutzgases vorzugsweise nach dem Filter vorgesehen ist, wobei der Kühler als Röhrenkühler ausgebildet sein kann, in dessen Röhren rotierende Bürsten vorgesehen sind, die an den Röhreninnenwänden kondensierendes Öl, Teere, Wasser und anderweitige Ablagerungen zu einer Auffangeinheit abzutransportieren vermögen, wobei die Bürsten spiralförmig ausgebildet sind und/oder daß die Röhren stehend angeordnet sein können.

8. Gaserzeuger nach einem der vorangehenden Ansprüchen, **dadurch gekennzeichnet, daß** beim Gaswäscher mehrere rotierende Öldüsen vorgesehen sind, die von einem ebenfalls rotierenden Schleuderrad umgeben sind und daß das Gas in den Raum zwischen Düsen und Schleuderrad eingeleitet werden kann.

9. Gaserzeuger nach Anspruch 8, **dadurch gekennzeichnet, daß** ein Tropfenabscheider vorgesehen ist, der das Nutzgas vom Ölnebel zu trennen vermag, wobei eine Vielzahl von Prallblechen vorgesehen sein kann, die zueinander versetzt und/oder verwinkelt angeordnet sind und daß an diesen Prallblechen der mit Verunreinigungen versetzte Ölnebel abgeschieden und zu einem Ölvorrat abgeleitet werden kann.

10. Gaserzeuger nach Anspruch 8 oder 9, **dadurch gekennzeichnet, daß** ein Filtereinsatz dem Gaswäscher nachgeschaltet ist.

11. Gaserzeuger nach einem der Ansprüche 8 bis 10, **dadurch gekennzeichnet, daß** der Tropfenabscheider koaxial zum Ölwäscher angeordnet ist.

12. Gaserzeuger nach einem der vorangehenden Ansprüche, **dadurch gekennzeichnet, daß** eine Sicherheitseinrichtung zur Verhinderung von Flammrückschlägen oder dergleichen dem Gaserzeuger nachgeschaltet ist.

13. Gaserzeuger nach Anspruch 12, **dadurch gekennzeichnet, daß** ein Wasserbad vorgesehen ist, durch welches das Nutzgas hindurchgeleitet wird.

## Claims

1. Pyrolytic gas generator for energy producing clean useful gas from biomass, particularly wood, oil seeds or the like, **characterised in that** the gas generator is provided in multi-chambered construction, wherein the gas producer is provided with a support burner, which can supply heat from outside to a gasification channel during gasification of the biomass, a pre-pyrolysis pipe upstream of the gasification channel and an ash discharge downstream of the gasification channel, wherein the generated gas is re-gasified in the gasification channel, whilst the material to be gasified is mechanically transported from a material container to the ash discharge, wherein the gasification material is dried and pre-pyrolysed in the pre-pyrolysis pipe and which then subsequently passes through a filling shaft into the gasification channel, wherein arranged below the gasification channel is a lower chamber into which the support burner delivers heat, wherein the support burner is arranged at the same end of the gasification channel as that at which the filling shaft is also arranged, wherein arranged at the end of the lower chamber remote from the support burner is a transfer to an upper chamber which surrounds the gasification channel in the upper region, whereby the upper chamber and the lower chamber completely surround the gasification chamber and wherein a support realised at least in sections is provided under the gasification channel and prevents distortion and warping of the gasification channel.

2. Gas generator according to claim 1, **characterised in that** a filter for the hot useful gas is provided, which is downstream of the gasification channel and which is capable of filtering out the solid residues in the useful gas, entrained ash and dust, that a gas washer is provided in which the gas is washed with the help of an oil mist and that a feed of the charged oil to the support burner is provided.

3. Gas generator according to claim 1 or 2, **characterised in that** not only the pre-pyrolysis pipe, but also the gasification pipe have a channel for the feed of external heat, that the heat feed channel can be arranged substantially below the respective process channel, but nevertheless to surround this, that the heat feed channel is arranged below the process channel and at the end remote from the support burner can then go over into a channel surrounding the process channel and/or that guide plates can be provided at the gasification channel and/or at the pre-pyrolysis pipe and project into the heat feed channel.

4. Gas generator according to any one of the preceding claims, **characterised in that** a transport worm or other form of transport device for uniform transportation of the gasification material is provided in the pre-pyrolysis pipe and/or in the gasification channel and/or that a coke container with coarse coke is provided, through which the generated useful gas is conducted for filtering and cooling down, wherein a gas inlet line can be provided in the roof region of the coke container above the content and/or wherein a gas outlet line consisting of a plurality of pipes can be provided in the lower region of the coke container and/or wherein a device for feeding coke, which is loaded with gas residues, to the gasification channel can be provided and/or wherein a discharge for incompletely gasified gasification material can be provided at the end of the gasification channel.

5. Gas generator according to claim 4, **characterised in that** a feed device is provided which is capable of feeding the discharged gasification material to the start of the gasification pipe and/or that a feed device is provided which feeds the discharged gasification material to the coke container, wherein a sieve device can be provided which is capable of sieving out small particles from the incompletely gasified gasification material prior to feed to the coke container, wherein in turn a feed of the sieved-out gasification material to the discharge of the coke container can be provided.

6. Gas generator according to any one of the preceding claims, **characterised in that** the filter can be constructed as a ceramic filter with a plurality of filter channels and/or wherein a cleaning device can be provided in the filter, which as cleaning device can have a plurality of gas nozzles loadable in pulsating manner with cleaned gas under pressure.

7. Gas generator according to any one of the preceding claims, **characterised in that** a cooler for cooling the useful gas, preferably after the filter, is provided, wherein the cooler can be constructed as a tube cooler in the tubes of which are provided rotating brushes capable of transporting away to a collecting unit oil, tar, water and other deposits condensing on the tube inner walls, wherein the brushes are of spiral construction and/or the tubes can be arranged to be upright.

8. Gas generator according to any one of the preceding claims, **characterised in that** provided at the gas washer are several rotating oil nozzles which are surrounded by a similarly rotating centrifuging wheel and that the gas can be conducted into the space between nozzles and centrifuging wheel.

9. Gas generator according to claim 8, **characterised in that** a mist collector capable of separating the useful gas from the oil mist is provided, wherein a plurality of baffle plates can be provided, which plates are arranged to be offset and/or angled relative to one another, and that the oil mist loaded with contaminants can be separated at these baffle plates and conducted away to an oil reservoir.

10. Gas generator according to claim 8 or 9, **characterised in that** a filter insert is downstream of the gas washer.

11. Gas generator according to any one of claims 8 to 10, **characterised in that** the mist collector is arranged coaxially with the oil washer.

12. Gas generator according to any one of the preceding claims, **characterised in that** a safety device for preventing flammable residues or the like is downstream of the gas generator.

13. Gas generator according to claim 12, **characterised in that** a water bath through which the useful gas is conducted is provided.

## Revendications

1. Générateur de gaz par pyrolyse pour produire du gaz utile propre à partir de biomasse, en particulier de bois, de graines oléagineuses ou analogues, **caractérisé en ce que** le générateur de gaz est prévu dans une configuration à plusieurs chambres, le générateur de gaz étant pourvu d'un brûleur auxiliaire qui peut amener de la chaleur de l'extérieur à un conduit de gazéification pendant la gazéification de la biomasse, un tube de prépyrolyse étant monté en amont du conduit de gazéification et une évacuation de cendres montée en aval du conduit de gazéification, les gaz produits étant soumis à une gazéification complémentaire dans le conduit de gazéification tandis que la matière à gazéifier est transportée mécaniquement d'un récipient de matière à l'évacuation de cendres, la matière à gazéifier étant séchée et prépyrolysée dans le tube de prépyrolyse, puis parvenant dans le conduit de gazéification à travers un puits de remplissage, une chambre inférieure étant disposée sous le conduit de gazéification, dans laquelle le brûleur auxiliaire cède de la chaleur, le brûleur auxiliaire étant disposé à la même extrémité du conduit de gazéification que celle où est disposé le puits de remplissage, un passage vers une chambre supérieure, qui entoure le conduit de gazéification dans la partie supérieure, étant disposé à l'extrémité de la chambre inférieure opposée au brûleur auxiliaire, de sorte que la chambre supérieure et la chambre inférieure entourent complètement le conduit de gazéification, et un support réalisé au moins dans certains zones étant prévu sous le conduit de gazéification, lequel empêche une torsion et un fléchissement du conduit de gazéification.

2. Générateur de gaz selon la revendication 1, **caractérisé en ce qu'**un filtre pour le gaz utile chaud est prévu, qui est monté en aval du conduit de gazéification et qui est apte à filtrer les résidus solides dans le gaz utile, la cendre et la poussière entraînées et qu'un laveur de gaz est prévu, dans lequel le gaz est lavé à l'aide d'un brouillard d'huile et qu'une amenée de l'huile polluée au brûleur auxiliaire est prévue.

3. Générateur de gaz selon la revendication 1 ou 2, **caractérisé en ce qu'**aussi bien le tube de prépyrolyse que le conduit de gazéification présentent un conduit pour l'amenée de chaleur externe et que le conduit d'amenée de chaleur peut être disposé sensiblement sous le conduit de processus respectif, en entourant néanmoins celui-ci, et que le conduit d'amenée de chaleur est disposé sous le conduit de processus et peut ensuite se transformer, à l'extrémité opposée au brûleur auxiliaire, en un conduit entourant le conduit de processus, et/ou que des tôles déflectrices peuvent être prévues sur le conduit de gazéification et/ou sur le tube de prépyrolyse, lesquelles pénètrent dans le conduit d'amenée de chaleur.

4. Générateur de gaz selon l'une des revendications précédentes, **caractérisé en ce qu'**une vis transporteuse ou un autre moyen de transport est prévu(e) dans le tube de prépyrolyse et/ou dans le conduit de gazéification pour le transport régulier de la matière à gazéifier et/ou qu'un réservoir à coke contenant du coke grossier est prévu, à travers lequel le gaz utile produit est conduit pour être filtré et refroidi, une entrée de gaz pouvant être prévue dans la zone supérieure du réservoir à coke au-dessus du matériau de remplissage et/ou une sortie de gaz constituée d'une pluralité de tubes pouvant être prévue dans la zone inférieure du réservoir à coke et/ou un moyen pour amener du coke chargé de résidus gazeux au conduit de gazéification pouvant être prévu et/ou une évacuation pour du produit de gazéification incomplètement gazéifié pouvant être prévu à l'extrémité du conduit de gazéification.

5. Générateur de gaz selon la revendication 4, **caractérisé en ce qu'**un moyen d'amenée est prévu, qui est apte à amener le produit de gazéification évacué au début du tube de gazéification et/ou qu'un moyen d'amenée est prévu, qui amène le produit de gazéification évacué au réservoir à coke, un moyen de tamisage pouvant être prévu, qui est apte à tamiser les petites particules du produit de gazéification incomplètement gazéifié avant l'amenée au réservoir à coke, une amenée du produit de gazéification tamisé à l'évacuation du réservoir à coke pouvant de nouveau être prévue.

6. Générateur de gaz selon l'une des revendications précédentes, **caractérisé en ce que** le filtre peut être réalisé sous la forme d'un filtre en céramique présentant une pluralité de canaux filtrants, un moyen de décolmatage ou de nettoyage pouvant être prévu dans le filtre, lequel moyen de décolmatage ou de nettoyage peut être prévu avec une pluralité de buses à gaz qui peuvent être soumises par intermittence à du gaz utile purifié sous pression.

7. Générateur de gaz selon l'une des revendications précédentes, **caractérisé en ce qu'**un refroidisseur pour refroidir le gaz utile est prévu, de préférence après le filtre, le refroidisseur pouvant être réalisé sous la forme d'un refroidisseur à tubes dans les tubes duquel sont prévues des brosses rotatives qui sont aptes à évacuer l'huile, les goudrons et l'eau qui se condensent et d'autres dépôts sur les parois intérieures des tubes vers une unité collectrice, les brosses étant réalisées en forme de spirale et/ou les tubes pouvant être disposés en position verticale.

8. Générateur de gaz selon l'une des revendications précédentes, **caractérisé en ce que** plusieurs buses à huile rotatives sont prévues dans le laveur de gaz, lesquelles sont entourées par une roue centrifuge également rotative et que le gaz peut être introduit dans l'espace entre les buses et la roue centrifuge.

9. Générateur de gaz selon la revendication 8, **caractérisé en ce qu'**un séparateur de gouttes est prévu, qui est apte à séparer le gaz utile du brouillard d'huile, une pluralité de chicanes pouvant être prévue, lesquelles sont disposées décalées et/ou à angle les unes par rapport aux autres et que le brouillard d'huile chargé d'impuretés peut être séparé sur ces chicanes et dérivé vers une réserve d'huile.

10. Générateur de gaz selon la revendication 8 ou 9, **caractérisé en ce qu'**une cartouche filtrante est montée en aval du laveur de gaz.

11. Générateur de gaz selon l'une des revendications 8 à 10, **caractérisé en ce que** le séparateur de gouttes est disposé coaxialement au laveur de gaz.

12. Générateur de gaz selon l'une des revendications précédentes, **caractérisé en ce qu'**un dispositif de sécurité pour empêcher les retours de flamme ou analogues est monté en aval du générateur de gaz.

13. Générateur de gaz selon la revendication 12, **caractérisé en ce qu'**un bain d'eau est prévu, à travers lequel le gaz utile est conduit.
